(19) Europäisches Patentamt
European Patent Office
Office européen des brevets

(11) EP 3 872 114 A1

(12) # EUROPEAN PATENT APPLICATION
published in accordance with Art. 153(4) EPC

(43) Date of publication:
**01.09.2021 Bulletin 2021/35**

(21) Application number: **19876070.4**

(22) Date of filing: **15.10.2019**

(51) Int Cl.:
***C08G 63/672*** *(2006.01)* ***C08K 7/04*** *(2006.01)*
***C08L 67/03*** *(2006.01)*

(86) International application number:
**PCT/JP2019/040441**

(87) International publication number:
**WO 2020/085143 (30.04.2020 Gazette 2020/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2018 JP 2018198748**

(71) Applicant: **ENEOS Corporation**
**Chiyoda-ku**
**Tokyo 100-8162 (JP)**

(72) Inventor: **MATSUURA Hiroshi**
**Tokyo 100-8162 (JP)**

(74) Representative: **Müller-Boré & Partner Patentanwälte PartG mbB**
**Friedenheimer Brücke 21**
**80639 München (DE)**

(54) **CRYSTALLINE WHOLLY AROMATIC POLYESTER AND POLYESTER RESIN COMPOSITION**

(57) [Problem to be Solved]
To provide a crystalline wholly aromatic polyester that is capable of improving slidability (friction properties or abrasion properties, PV limit) and thermal stability at the time of molding, while having heat resistance.
[Means to Solve the Problem]
The crystalline wholly aromatic polyester according to the present invention is a polycondensate of an aromatic dicarboxylic acid and an aromatic diol, wherein
a structural unit derived from the aromatic dicarboxylic acid comprises structural unit (I) represented by the following formula (1):

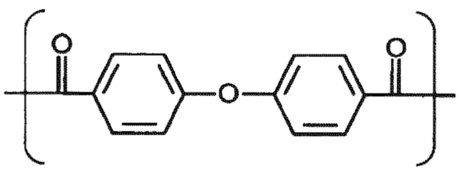

(1)

;

structural unit (II) represented by the following formula (2):

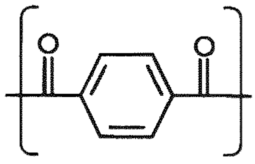

(2)

;

and
structural unit (III) represented by the following formula (3):

EP 3 872 114 A1

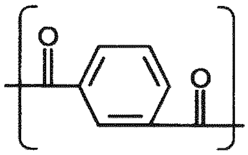
(3)

and a structural unit derived from the aromatic diol comprises structural unit (IV) represented by the following formula (4):

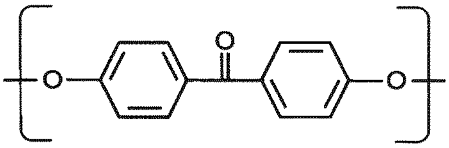
(4)

and wherein the composition ratio (mol %) of the structural units (I) to (III) in the entire structural units of the crystalline wholly aromatic polyester satisfies the following conditions:

30 mol % ≤ structural unit (I) ≤ 40 mol %

5 mol % ≤ structural unit (II) ≤ 10 mol %

5 mol % ≤ structural unit (III) ≤ 10 mol %

45 mol % ≤ structural unit (I) + structural unit (II) + structural unit (III) ≤ 50 mol %.

## Description

BACKGROUND OF THE INVENTION

Field of the Invention

The present invention relates to a crystalline wholly aromatic polyester. The present invention also relates to a polyester resin composition comprising the crystalline wholly aromatic polyester and a filler. The present invention further relates to a molded article comprising the crystalline wholly aromatic polyester and a molded article comprising the polyester resin composition.

Background Art

A wholly aromatic polyether ether ketone having a repeating structural unit of an ether bond, an ether bond, and a ketone bond is known as a constituting material excellent in toughness and abrasion resistance. Specifically, those obtainable from manufacture by binding with nucleophilic displacement reaction of hydroquinone and a benzophenone derivative are commercially available, called "PEEK".

The "PEEK" has expanded its application as a structural material of machinery parts such as gears and bearings; however, it is sometimes concerned of its insufficiency in injection moldability and heat resistance.

Also is known a method for manufacturing a polymer having ketone bonds in the repeating structural unit. For example, in Patent Document 1, there is disclosed a method for manufacturing a polymer by reaction of (a) an organic compound containing at least one trichloromethyl ketone group with (b) an organic compound containing at least one hydroxyl group, an amino group or an acyl group. However, there is no detailed suggestion for the material properties of the polymer disclosed in Patent Document 1.

Further, many resin products have been used in the recent years as machinery parts for the purpose of weight saving of the machines or cost reduction of the products, and many resin products are utilized in the machinery parts required with slidability (friction properties or abrasion properties, PV limit). As for such resin products, resin compositions have been used to which additives are added to the thermoplastic resin for improving the slidability, such as a lubricant. The use of a thermoplastic resin under a relatively low temperature condition is not much problematic; however, the product becomes more susceptible to abrasion as the temperature increases due to the melting point of the resin, and there was a problem that the product burns and sticks due to the friction heat or melts and becomes unusable.

The present inventors have been developing a crystalline polyester having the injection moldability and heat resistance of the crystalline polyester as well as the slidability equal to or higer than the "PEEK", in consideration of the above situation. For example, in Patent Document 2, the present inventors have proposed including a structural unit derived from a specific "aromatic dicarboxylic acid having an ether group in a molecule" (4,4'-dicarboxylic diphenyl ether) and a structural unit derived from a specific "aromatic diol having a carbonyl group (ketone group) in a molecule" (4,4'-dihydroxybenzophenone) as the main structural units in a crystalline wholly aromatic polyester that is a polycondensate of an aromatic dicarboxylic acid and an aromatic diol.

Prior Art Document

[Patent Document]

Patent Document 1: JPS62-7715
Patent Document 2: WO2016/158839

SUMMARY OF THE INVENTION

Problem to be Solved

However, the present inventors have found that the crystalline wholly aromatic polyester disclosed in Patent Document 2 has room for improvement in slidability (friction properties or abrasion properties, PV limit) and thermal stability at the time of molding. Therefore, the problem of the present invention is to obtain a crystalline wholly aromatic polyester that is capable of improving the slidability (friction properties or abrasion properties, PV limit) and thermal stability at the time of molding, while having the heat resistance of a crystalline polyester.

Another problem of the present invention is to obtain a polyester resin composition having excellent mechanical

characteristics in addition to the slidability (friction properties or abrasion properties, PV limit) and thermal stability at the time of molding by blending a filler to the crystalline wholly aromatic polyester.

Means to Solve the Problem

The present inventors have conducted diligent studies in order to solve the above-described problem, and as a result, have found that the above-described problem can be solved by adjusting structural units derived from at least three specific compounds as structural units derived from an aromatic dicarboxylic acid to a specific composition ratio in a crystalline wholly aromatic polyester which is a polycondensate of an aromatic dicarboxylic acid and an aromatic diol, thereby completing the present invention.

According to one embodiment of the present invention, there is provided:

a crystalline wholly aromatic polyester which is a polycondensate of an aromatic dicarboxylic acid and an aromatic diol, wherein

a structural unit derived from the aromatic dicarboxylic acid comprises structural unit (I) represented by the following formula (1):

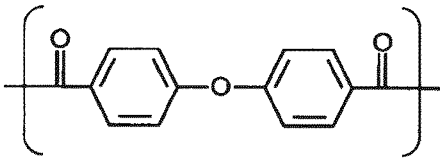
(1)

;

structural unit (II) represented by the following formula (2):

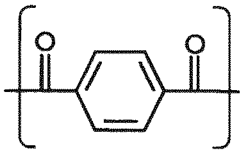
(2)

;

and structural unit (III) represented by the following formula (3):

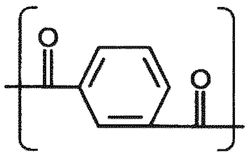
(3)

and a structural unit derived from the aromatic diol comprises structural unit (IV) represented by the following formula (4):

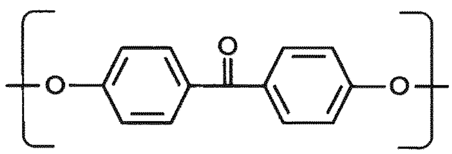
(4)

and wherein the composition ratio (mol %) of the structural units (I) to (III) in the entire structural units of the crystalline wholly aromatic polyester satisfies the following conditions:

$$30 \text{ mol } \% \leq \text{structural unit (I)} \leq 40 \text{ mol } \%$$

$$5 \text{ mol } \% \leq \text{structural unit (II)} \leq 10 \text{ mol } \%$$

$$5 \text{ mol } \% \leq \text{structural unit (III)} \leq 10 \text{ mol } \%$$

$$45 \text{ mol } \% \leq \text{structural unit (I)} + \text{structural unit (II)} + \text{structural unit (III)} \leq 50 \text{ mol } \%.$$

In one embodiment of the present invention, the composition ratio (mol %) of the structural units (I) to (III) in the entire structural units of the crystalline wholly aromatic polyester preferably satisfies the following conditions:

$$32 \text{ mol } \% \leq \text{structural unit (I)} \leq 39 \text{ mol } \%$$

$$5 \text{ mol } \% \leq \text{structural unit (II)} \leq 8 \text{ mol } \%$$

$$6 \text{ mol } \% \leq \text{structural unit (III)} \leq 10 \text{ mol } \%$$

$$48 \text{ mol } \% \leq \text{structural unit (I)} + \text{structural unit (II)} + \text{structural unit (III)} \leq 50 \text{ mol } \%.$$

In one embodiment of the present invention, the composition ratio (mol %) of the structural unit (IV) in the entire structural units of the crystalline wholly aromatic polyester preferably satisfies the following condition:

$$45 \text{ mol } \% \leq \text{structural unit (IV)} \leq 50 \text{ mol } \%.$$

In one embodiment of the present invention, the melting point of the crystalline wholly aromatic polyester is preferably 300 °C or higher and lower than 360 °C.

In one embodiment of the present invention, the melting point of the crystalline wholly aromatic polyester is preferably 305 °C or higher and 335 °C or less.

According to another embodiment of the present invention, there is provided a polyester resin composition comprising the crystalline wholly aromatic polyester and a filler.

According to another embodiment of the present invention, the filler preferably comprises a fibrous filler material.

In another embodiment of the present invention, the fibrous filler material is preferably selected from the group consisting of carbon fibers, silicon carbide fibers, ceramic fibers, glass fibers, boron nitride fibers, wollastonites, wiskers, metallic fibers, and aramid fibers.

In another embodiment of the present invention, the filler preferably comprises a non-fibrous filler material.

In another embodiment of the present invention, the non-fibrous filler material is preferably selected from the group consisting of fluorine resins, graphites, boron nitrides, and molybdenum disulfides.

In another embodiment of the present invention, the content of the filler in the polyester resin composition is preferably 1 to 70 parts by mass in the case when the whole amount of the polyester resin composition is 100 part by mass.

According to another further embodiment of the present invention, there is provided a molded article comprising the crystalline wholly aromatic polyester or the polyester resin composition.

DETAILED DESCRIPTION OF THE INVENTION

Effect of the Invention

The crystalline wholly aromatic polyester according to the present invention can improve the slidability (friction properties or abrasion properties, PV limit) and thermal stability at the time of molding while having heat resistance (high melting point and high glass transition temperature). According to the present invention, it is possible to obtain a polyester resin composition comprising such crystalline wholly aromatic polyester and a filler. Further, according to the present invention, it is possible to obtain a molded article comprising the crystalline wholly aromatic polyester and a molded article comprising the polyester resin composition. These molded articles are useful as a structural material of various

machinery parts, in particular, bearings, gears, chassis, and the like.

Mode for Carrying out the Invention

< Crystalline Wholly Aromatic Polyester >

The crystalline wholly aromatic polyester according to the present invention is a polycondensate of an aromatic dicarboxylic acid and an aromatic diol and comprises structural units derived from a specific "aromatic dicarboxylic acid having an ether group in the molecules" and a structural unit derived from a specific "aromatic diol having a carbonyl group (a ketone group) in the molecule" as the main repeating structural unit. In the present invention, the total of the structural units derived from a specific "aromatic dicarboxylic acid having an ether group in the molecule" and the structural unit derived from a specific "aromatic diol having a carbonyl group (a ketone group) in the molecule" preferably has a lower limit of 70 mol % or more, more preferably 75 mol % or more, further preferably 80 mol % or more, and an upper limit of preferably 90 mol % or less, more preferably 88 mol % or less, further preferably 86 mol % or less, in the entire structural units of the crystalline wholly aromatic polyester in view of heat resistance and mechanical characteristics. Note that, the composition ratio (mol %) of the structural units derived from the aromatic dicarboxylic acid and the composition ratio (mol %) of the structural unit derived from the aromatic diol in the entire structural units of the crystalline wholly aromatic polyester are substantially equivalent.

(Aromatic dicarboxylic acid)

The structural unit derived from the "aromatic dicarboxylic acid having an ether group in the molecule" in the wholly aromatic polyester is represented by formula (1). Structural unit (I) represented by formula (1) can be obtained by using, for example, 4,4-dicarboxydiphenyl ether (DCPE, formula (9)) and derivatives thereof.

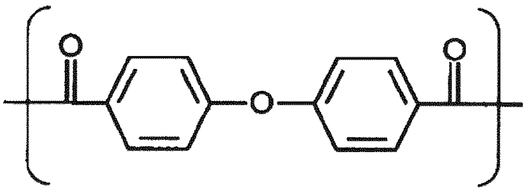
(1)

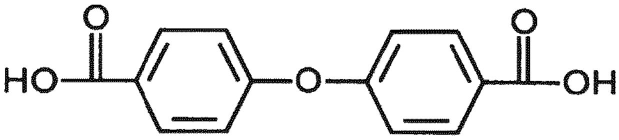
(9)

The present invention further comprises both of structural unit (II) represented by formula (2) and structural unit (III) represented by formula (3) as the structural units derived from an aromatic dicarboxylic acid. The structural unit (II) represented by formula (2) can be obtained by using, for example, a terephthalic acid (TPA, formula (10)) or derivatives thereof. The structural unit (III) represented by formula (3) can be obtained by using, for example, an isophthalic acid (IPA, formula (11)) or derivatives thereof.

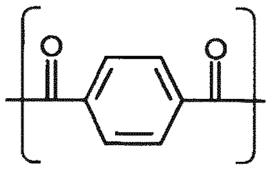
(2)

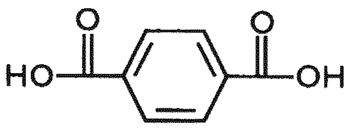
(10)

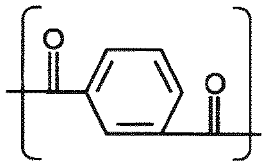

(3)

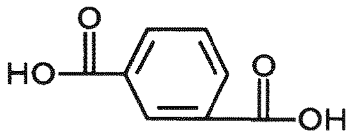

(11)

In the present invention, the composition ratio (mol %) of the structural units (I) to (III) derived from an aromatic dicarboxylic acid in the entire structural units of the crystalline wholly aromatic polyester preferably satisfies the following conditions:

$$30 \text{ mol } \% \leq \text{structural unit (I)} \leq 40 \text{ mol } \%$$

$$5 \text{ mol } \% \leq \text{structural unit (II)} \leq 10 \text{ mol } \%$$

$$5 \text{ mol } \% \leq \text{structural unit (III)} \leq 10 \text{ mol } \%.$$

More preferably, the composition ratio (mol %) of the structural units (I) to (III) satisfies the following conditions:

$$32 \text{ mol } \% \leq \text{structural unit (I)} \leq 39 \text{ mol } \%$$

$$5 \text{ mol } \% \leq \text{structural unit (II)} \leq 8 \text{ mol } \%$$

$$6 \text{ mol } \% \leq \text{structural unit (III)} \leq 10 \text{ mol } \%.$$

Further preferably, the composition ratio (mol %) of the structural units (I) to (III) satisfies the following conditions:

$$34 \text{ mol } \% \leq \text{structural unit (I)} \leq 38 \text{ mol } \%$$

$$6 \text{ mol } \% \leq \text{structural unit (II)} \leq 8 \text{ mol } \%$$

$$6 \text{ mol } \% \leq \text{structural unit (III)} \leq 8 \text{ mol } \%.$$

The composition ratio of the structural units (I) to (III) derived from aromatic dicarboxylic acid being within the above-described numerical ranges makes it possible to obtain a crystalline wholly aromatic polyester that improves the slidability (friction properties or abrasion properties, PV limit) and thermal stability at the time of molding, while having heat resistance. In particular, the slidability (friction properties or abrasion properties, PV limit) can be improved by increasing the composition ratio of the structural unit (II); however, on the other hand there is a risk that the melt polymerization and molding process are hindered in the manufacturing process of the crystalline wholly aromatic polyester. When the composition ratio of the structural unit (III) is increased, the melting point decreases and the melt polymerization and molding process become easy in the manufacturing process of the crystalline wholly aromatic polyester; however there is a risk that the slidability decreases. In the present invention, the good balance of the composition ratio of the structural units (II) and (III) allows melt polymerization and thus allows one to achieve a crystalline wholly

aromatic polyester that improves the slidability (friction properties or abrasion properties, PV limit) and thermal stability at the time of molding, while having heat resistance.

The total composition ratio (mol %) of the structural units (I) to (III) derived from an aromatic dicarboxylic acid in the entire structural units in the crystalline wholly aromatic polyester preferably satisfies the following condition:

$$45 \text{ mol } \% < \text{structural unit (I)} + \text{structural unit (II)} + \text{structural unit (III)} \leq 50 \text{ mol } \%.$$

More preferably, the total composition ratio (mol %) of the structural units (I) to (III) derived from an aromatic dicarboxylic acid satisfies the following condition:

$$48 \text{ mol } \% \leq \text{structural unit (I)} + \text{structural unit (II)} + \text{structural unit (III)} \leq 50 \text{ mol } \%.$$

Further preferably, the total composition ratio (mol %) of the structural units (I) to (III) derived from an aromatic dicarboxylic acid satisfies the following condition:

$$\text{structural unit (I)} + \text{structural unit (II)} + \text{structural unit (III)} = 50 \text{ mol } \%.$$

The structural units derived from an aromatic dicarboxylic acid being consisted mainly of the structural units (I) to (III) makes it possible to obtain a crystalline wholly aromatic polyester that improves the slidability (friction properties or abrasion properties, PV limit) and thermal stability at the time of molding, while having heat resistance.

As for the structural units derived from an aromatic dicarboxylic acid, other structural units may be included than the structural units (I) to (III) above. Examples of the other structural units include 2,6-naphthalene dicarboxylic acid (NADA) and derivatives thereof. The composition ratio of the other structural units is preferably less than 5 mol %, more preferably less than 2 mol %, or may be 0 mol %.

(Aromatic Diol According to the Invention)

The structural unit derived from "aromatic diol having a carbonyl group (a ketone group) in the molecule" in the wholly aromatic polyester according to the present invention comprises structural unit (IV) represented by formula (4). The structural unit (IV) represented by formula (4) can be obtained by using, for example, 4,4'-dihydroxybenzophenone (DHBP, formula (12)) and derivatives thereof.

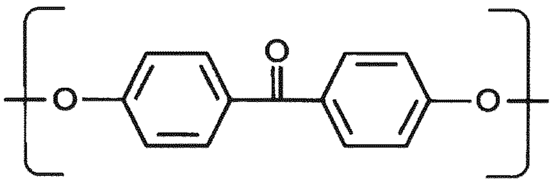

(4)

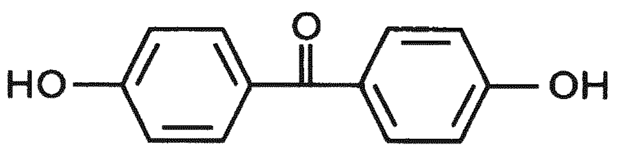

(12)

In the present invention, a part of the structural unit represented by formula (4) may be substituted by any of the structural units represented by formulae (5), (6) or (7). These structural units can be respectfully obtained by using, for example, hydroquinone (HQ, formula (13)) and derivatives thereof, resorcinol (Res, formula (14)) and derivatives thereof, and 4,4'-dihydroxybiphenyl (BP, formula (15)) and derivatives thereof.

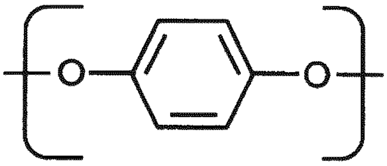

(5)

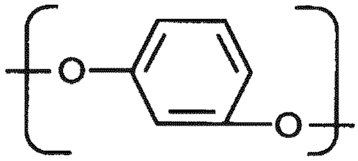

(6)

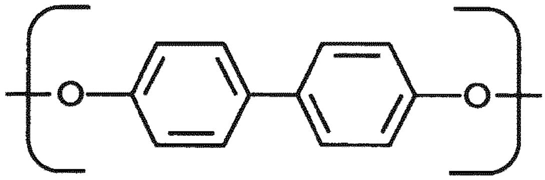

(7)

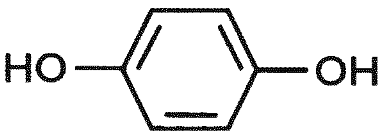

(13)

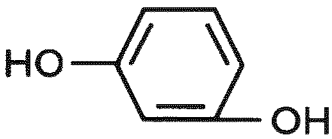

(14)

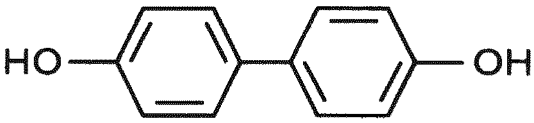

(15)

In the present invention, a portion of the structural unit (IV) represented by formula (4) may be substituted with a structural unit represented by formula (8). These structural units can be obtained by using an aromatic diol and derivatives (formula (16)) thereof.

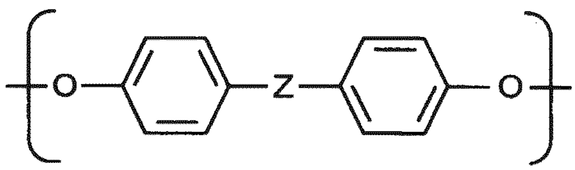

(8)

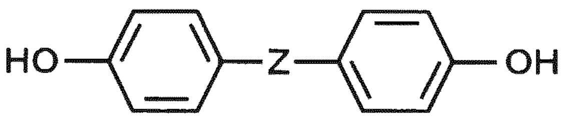

(16)

In the above described formulae (8) and (16), Z is a divalent substituent having 1 to 20 atoms comprising at least one of a hydrocarbon group, an oxygen atom, a sulfur atom, and a halogen may be bound to such substituent. Z also has preferably 6 or less, more preferably 3 or less backbone atoms constituting the linking groups, excluding hydrogen elements. However, Z is not a carbonyl group (-C(=O)-), i.e. formula (8) does not encompass formula (4) and

formula (16) does not encompass formula (12).

Many compounds corresponding to formula (16) are commercially available. Particular examples of "Z" are as follows:

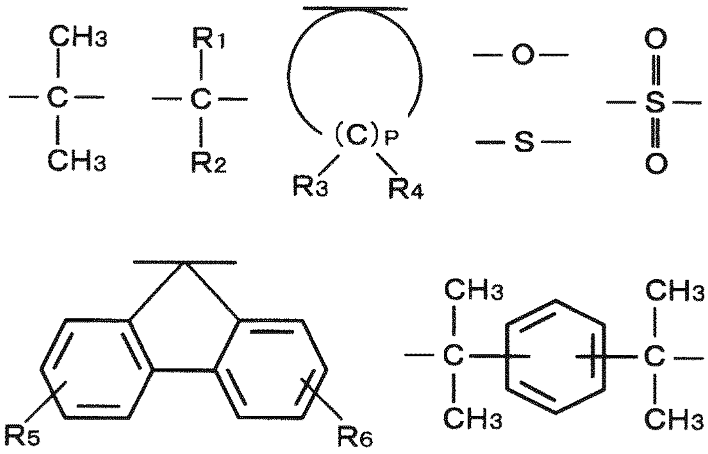

wherein $R_1$ and $R_2$ are a hydrogen atom or a hydrocarbon group having 1 to 10 carbon(s), $R_3$ and $R_4$ are a hydrogen atom or an alkyl group having 1 to 3 carbon(s), p is an integer from 4 to 7, and $R_5$ and $R_6$ are any of a hydrogen atom, an alkyl group having 1 to 3 carbon(s), or a halogen atom.

Amongst these, a portion of the structural unit (IV) represented by formula (4) can be substituted with a structural unit represented by either formula (8a) or formula (8b). Each of these structural units can be obtained by using, for example, 4,4'-dihydroxydiphenyl sulfone (formula (16a)) and derivatives thereof or 4,4'-dihydroxydiphenyl sulfide (formula (16b)).

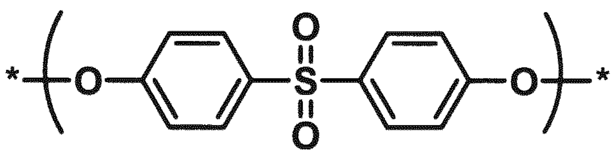

(8 a)

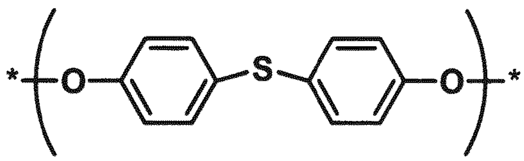

(8 b)

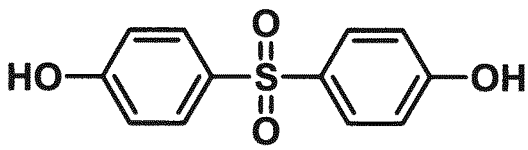

(1 6 a)

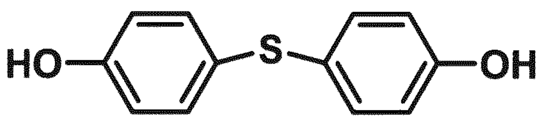

(1 6 b)

The composition ratio of the structural unit (IV) represented by formula (4) in the entire structural units of the crystalline wholly aromatic polyester has a lower limit of preferably 45 mol % or more, more preferably 46 mol % or more, further preferably 47 mol % or more, further more preferably 48 mol % or more, and an upper limit of preferably 50 mol

% or less, or even 50 mol %.

So far, each structural unit has been explained and when the entire molecular constitution is looked down upon, it is considered that the employment of the ester bond of the structural unit formed of formulae (1) and (4) as the main repeating unit exerts both the properties of heat resistance (melting point and glass transition temperature) and slidability (friction properties or abrasion properties, PV limit) of the wholly aromatic polyester efficiently and also in a good balance.

The melting point of the crystalline wholly aromatic polyester according to the present invention has a lower limit of preferably 300 °C or higher, more preferably 305 °C or higher, further preferably 310 °C or higher, and an upper limit at the time of molding process of preferably less than 360 °C, more preferably 355 °C or lower, further preferably 350 °C or lower, further more preferably 335 °C or lower in view of heat resistance in actual use. The melting point of the resin molded article according to the present invention being within the above described numerical ranges makes the heat resistance and heat stability at the time of molding excellent.

In the present specification, the melting point of the crystalline wholly aromatic polyester is the value measured by a differential scanning calorimeter (DSC) manufactured by Hitachi High-Tech Science K.K. At this time, the melting point is the endothermic peak obtained when the polyester was completely melted by heating from room temperature to 390 °C at a temperature increasing rate of 20 °C/min and subsequently decreasing the temperature to 50 °C at a rate of 10 °C/min and further increasing the temperature to 420 °C at a rate of 20 °C/min.

The glass transition temperature of the crystalline wholly aromatic polyester according to the present invention has a lower limit of preferably 120 °C or higher, more preferably 140 °C or higher and an upper limit of preferably 170 °C or lower.

The glass transition temperature of the crystalline wholly aromatic polyester according to the present invention being within the above-described numerical ranges makes it possible to improve the heat resistance of the molded article used for structural materials such as various machinery parts.

In the present specification, the glass transition temperature of the crystalline wholly aromatic polyester can be obtained from a peak top temperature of loss tangent, tan$\delta$, obtainable from dynamic viscoelasticity measurement by using a dynamic viscoelasticity measuring device (Hitachi High-Tech Science K.K.; product name: DMA7100) and the like, according to JISK7244.

< Manufacturing Method of Crystalline Wholly Aromatic Polyester >

The crystalline wholly aromatic polyester according to the present invention can be manufactured by polymerization of monomers that give at least structural units (I) to (IV) with a conventional method such as melt polymerization, solid-phase polymerization, solution polymerization, and slurry polymerization. In one embodiment, the crystalline wholly aromatic polyester can be also manufactured by a two-step polymerization in which a prepolymer is prepared by melt polymerization and the resultant is further subjected to solid-phase polymerization.

In view of obtaining the crystalline wholly aromatic polyester efficiently, melt polymerization is preferably performed under acetic acid reflux in the presence of 1.05 to 1.15 mol equivalent of anhydrous acetic acid based on all the hydroxyl groups in the monomers when monomers were added in a predetermined blend to 100 mol %.

When the polymerization reaction is done in two-steps of melt polymerization followed by solid-phase polymerization, a preferred method is in which a prepolymer obtained by melt polymerization is cooled, solidified and subsequently crushed in to a powder or a flake form, and thereafter a known solid-phase polymerization method is employed in which for example, the prepolymer is heat-treated for 1 to 30 hours in the temperature range of 200 to 350 °C under inert atmosphere of nitrogen, etc. or under vacuum. The solid-phase polymerization can be done with stirring or in a static state with no stirring.

The polymerization reaction may be conducted with the use or without the use of a catalyst. Examples of the catalyst used can be those which have been conventionally used as a catalyst for polymerization of polyester, including metallic salt catalysts such as magnesium acetate, stannous acetate, tetrabutyl titanate, lead acetate, sodium acetate, potassium acetate, and antimony trioxide and organic compound catalysts such as nitride-containing heterocyclic compounds such as N-methylimidazole. The amount of catalyst used is preferably, without particular limitation, 0.0001 to 0.1 parts by mass based on 100 part by mass of the total monomer amount.

The polymerization reaction device in the melt polymerization is not particularly limited and a reaction device is preferably used that is used in the reaction of a general highly viscous fluid. Examples of these reaction devices include a stirring tank-type polymerization reaction device having a stirring device with stirring blades of, for example, an anchor type, a multi-step type, a helical band type, a helical axis type, or of various shapes obtained by deforming these types, or mixing devices that are generally used in the kneading of a resin such as a kneader, a roll mill, and a banbury mixer.

< Polyester Resin Composition >

The polyester resin composition according to the present invention comprises the crystalline wholly aromatic

polyester as above and a filler to be described below. Such polyester resin composition can provide a molded article that has excellent slidability (friction properties or abrasion properties, PV limit) or mechanical characteristics and thermal stability as well as heat resistance by blending the crystalline wholly aromatic polyester and the filler in combination.

[Filler]

The filler preferably contains a filler material, and it can be used as a composite material obtained by mixing the filler material and other materials such as organic polymer materials. The filler material as above preferably contains a fibrous filler material and/or a non-fibrous filler material. By blending the filler to the resin composition comprising the crystalline wholly aromatic polyester as above, it is possible to obtain a molded article having excellent mechanical characteristics and slidability as well as heat resistance.

The fibrous filler material can be selected from inorganic and organic fibrous materials. Examples of the inorganic fibrous materials include, carbon fibers, silicon carbide fibers, ceramic fibers, glass fibers, asbestos fibers, alumina fibers, zirconium fibers, boron nitride fibers, silicon nitride fibers, boron fibers, wollastonites, wiskers, potassium titanate fibers, and metal fibers, and preferred are carbon fibers, silicon carbide fibers, ceramic fibers, glass fibers, wollastonites, wiskers, and metal fibers, and more preferred are carbon fibers and glass fibers. Examples of the organic fibrous materials include those having high melting points such as aramid fibers. The fibrous filler material can be in the form of nano-fibers.

Examples of the non-fibrous filler materials include mica, silica, talc, alumina, kaolin, calcium sulfate, calcium carbonate, titan oxide, ferrite, clay, glass powder, zinc oxide, nickel catbonate, iron oxide, quartz powder, magnesium carbonate, fluorine resin, graphite, boron nitride, melamine cyanurate, carbon powder, carbon black, nanotube, molybdenum disulfide, organic molybdenum, barium sulfate, and metal powders, and preferred are fluorine resins, graphites, boron nitride, and molybdenum disulfide. The non-fibrous filler materials may be introduced in the form of a powder or a flake particle.

The organic polymer materials do not encompass the above-described crystalline wholly aromatic polyester, and in view of the heat resistance of the polyester resin composition, preferred are non-melting polymer materials or high-melting point polymer materials. Examples of the polymer material include polyamide, polyacetal, thermoplastic polyester other than the above-described aromatic polyester, polyethylene, polypropylene, polyisobutylene, polyisoprene, polybutene, poly-p-xylene, poly vinyl chloride, poly vinylidene chloride, polycarbonate, modified polyphenylene ether, polyurethane, polydimethyl siloxane, polyvinyl acetate, polystyrene, methyl polyacrylate, methyl polymethacrylate, ABS resin, polyphenylene sulfide, polyether ether ketone, polyether ketone, polyphenylene sulfide sulfone, polyether nitrile, liquid crystalline polyester, liquid crystalline polyester amide, polyarylate, polysulfone, polyether sulfone, polyether imide, polyamide imide, polyimide, polyamino bismaleimide, triazine resin, epoxy resin, phenol resin, diallyl phthalate resin, or a modified product thereof, and preferred are polyphenylene sulfide, polyether ether ketone, liquid-crystalline polyester, polyarylate, polysulfone, polyether sulfone, polyether imide, polyamide imide, and polyimide.

The crystalline wholly aromatic polyester and the filler, the organic polymer material, are preferably mixed at a high temperature, and suitably, at a temperature equal to or higher than the melting point of the crystalline wholly aromatic polyester. Said high-temperature is suitably lower than the decomposition temperature of the crystalline wholly aromatic polyester and preferably equal to or more than the main peak of the melt endotherm of the crystalline wholly aromatic polyester. Said high temperature is suitably at least 300 °C, more suitably at least 350 °C.

The content of the filler in the polyester resin composition has a lower limit of preferably 1 part by mass or more, more preferably 5 part by mass or more, further preferably 10 part by mass or more, further more preferably 20 part by mass or more, and a higher limit of preferably 70 part by mass or less, more preferably 50 part by mass or less, further preferably 40 part by mass or less, further more preferably 35 part by mass or less, particularly preferably 32 part by mass or less, when the total amount of the polyester resin composition is 100 part by mass. When two or more fillers are contained, the total of the content can be within the above-described ranges. The use of such polyester resin having the content satisfying the above-described range is preferable since a molded article having excellent mechanical characteristics is obtainable.

< Other Components>

To the polyester resin component, it is possible to add a conventionally known colorant, dispersant, plasticizer, anti-oxidant, flame retardant, and the like, other than the fillers described above.

As for the antioxidant, preferred is phosphite ester represented by formula (17).

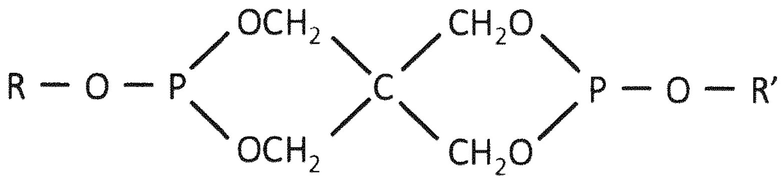

(17)

R and R' each independently represents an alkyl group, an alkenyl group, an aryl group, or an aralkyl group, and can represent the same or a different group.

The particular compounds of phosphite ester are exemplified as bis(2,6-di-tert-butyl-4-methylphenyl)pentaerythritol diphosphite, bis(2,4-di-tert-butylphenyl)pentaerythritol diphosphite, distearyl pentaerythritol diphosphite, bis(dodecyl)pentaerythritol diphosphite, bis(2,6-di-tert-butyl-4-methylphenyl)-2,4,8,10-tetraoxa-3,9-dip hosphaspiro[5.5]undecane, and the like.

The content of the phosphite ester in the polyester resin composition has a lower limit of preferably 0.001 part by mass or more, more preferably 0.01 part by mass or more, and a higher limit of preferably 1 part by mass or less, more preferably 0.5 part by mass or less, when the total amount of the crystalline wholly aromatic polyester is 100 part by mass. The content of the phosphite ester blended being within the above-described range makes it possible to reduce gas generation, and also suppress the increase of decomposed gas of the phosphite ester.

< Molded Article >

The crystalline wholly aromatic polyester and the polyester resin composition according to the present invention can be used as a molded article such as a resin molded material by molding with a conventionally known method. Any of the methods may be employed for the molding method, such as an injection molding, compression molding, extrusion molding, injection compression molding, and the like.

The crystalline wholly aromatic polyester and the polyester resin composition can be made into a sheet or a film by a conventionally known method. Any of the methods may be employed for making the sheet or film, such as an inflation molding, melt extrusion molding, solution casting, and the like. The film may be a single layer film or a multiple-layered film made of different kinds of materials. A stretching process may be performed with a single-screw or a twin-screw, for the purpose of improving the dimensional stability or the mechanical characteristics of the sheet or the film that has underwent melt extrusion molding or solution casting.

The crystalline wholly aromatic polyester and the polyester resin composition can be powder-coated onto the surface of the object to be coated with a known method. Amongst these, preferred are a flow immersion method, thermal spraying method, electrostatic powder method, and the like. For example, by means of an electrostatic powder coating, powder of polyester resin composition can be adhered homogeneously and subsequently, melting is done at a temperature of about 350 °C to 400 °C with an electric oven, etc. and thereafter, the object is taken out from the electric oven and quenched. Annealing treatment may be performed for the purpose of stabilizing the crystalline state and removing the residual stress.

The crystalline wholly aromatic polyester and the polyester resin composition can be used as a matrix resin and immersed into a carbon fiber aggregate by a conventionally known method to obtain CFRP. Examples of the method include, resin transfer molding (RTM), vacuum assisted resin transfer molding (VaRTM), or reaction injection molding (RIM). Further, it is possible to perform injection molding or press molding after immersing the matrix resin, or the matrix resin can be immersed by press molding.

(Application)

The molded article according to the present invention is excellent in slidability (friction properties or abrasion properties, PV limit), mechanical characteristics, and thermal stability while having heat resistance. Therefore, the molded article is useful for a constituting material of various machinery parts, automobile parts, and electric and electronic parts, in particular for various bearings, various gears wheels, various gears, various valves, chassis, bearings, washers, strut washers, sealings, guide rings, vane pump parts, ESC parts, impeller piston rings, shift forks, FOUP, coating of electric wires, speaker vibration plates, insulation films, various medical appliances, and banding bands, clamps, tubes, acoustic insulating films, structural materials for aircrafts, and the like.

EXAMPLES

Hereinafter, the present invention will be further elucidated with the aid of the Examples; however, the present

invention shall not be limited by the Examples below.

< Manufacture of Crystalline Wholly Aromatic Polyester >

(Example 1)

33 mol % of 4,4'-dicarboxydiphenyl ether (DCDPE), 7 mol % of terephthalic acid (TPA), 10 mol % of isophthalic acid (IPA), 50 mol % of 4,4'-dihydroxybenzophenone (DHBP), and potassium acetate and magnesium acetate as a catalyst (total moles of each monomer x 25 mg/ mol) were fed to a 200 ml three-neck glass flask equipped with a stirrer, and after performing nitrogen substitution by three times of pressure reduction-nitrogen injection of the flask, acetic acid anhydride (1.08 mol equivalent based on the hydroxyl group) was further added, the rotational speed of the stirring blades were set to 100 rpm, temperature was increased to 150 °C, and acetylation reaction was done for 2 hours under reflux.

After the acetylation has ended, the polymerization reservoir in a state which the acetic acid is distilling out was subjected to temperature increase at 0.5 °C/min. The acetic acid was once suspended from distilling out at the stage when the resin temperature reached 200 °C. At this time, without stopping the temperature increase of the polymerization reservoir, the reservoir was made into the state which the acetic acid is distilling out again when the temperature of the flask tank reached 320 °C. The polymerized product was taken out when the temperature of the melt in the flask tank reached 320 °C, and was cooled to solidify. The obtained polymerized product was ground with a pulverizer into a size that passes a sieve with an opening of 2.0 mm to give a prepolymer.

The obtained prepolymer as above was filled into a solid phase polymerization device, and after the device was heated to a temperature of 300 °C with a heater, solid polymerization was conducted while keeping the temperature at 300 °C for 1 hour. Subsequently, the device was left to release heat spontaneously at room temperature and a crystalline wholly aromatic polyester was obtained in a powder state.

(Example 2)

A crystalline wholly aromatic polyester was obtained from solid phase polymerization in the similar manner as Example 1, except that the monomer feed was changed to 33 mol % of DCDPE, 10 mol % of TPA, 7 mol % of IPA, 50 mol % of DHBP.

(Example 3)

A crystalline wholly aromatic polyester was obtained from solid phase polymerization in the similar manner as Example 1, except that the monomer feed was changed to 34 mol % of DCDPE, 9 mol % of TPA, 7 mol % of IPA, 50 mol % of DHBP.

(Example 4)

A crystalline wholly aromatic polyester was obtained from solid phase polymerization in the similar manner as Example 1, except that the monomer feed was changed to 34 mol % of DCDPE, 10 mol % of TPA, 6 mol % of IPA, 50 mol % of DHBP, and the final temperature of the solid phase polymerization was changed to 280 °C.

(Example 5)

A crystalline wholly aromatic polyester was obtained from solid phase polymerization in the similar manner as Example 1, except that the monomer feed was changed to 35 mol % of DCDPE, 8 mol % of TPA, 7 mol % of IPA, 50 mol % of DHBP.

(Example 6)

A crystalline wholly aromatic polyester was obtained from solid phase polymerization in the similar manner as Example 1, except that the monomer feed was changed to 35 mol % of DCDPE, 9 mol % of TPA, 6 mol % of IPA, 50 mol % of DHBP.

(Example 7)

A crystalline wholly aromatic polyester was obtained from solid phase polymerization in the similar manner as

Example 1, except that the monomer feed was changed to 35 mol % of DCDPE, 10 mol % of TPA, 5 mol % of IPA, 50 mol % of DHBP.

(Example 8)

A crystalline wholly aromatic polyester was obtained from solid phase polymerization in the similar manner as Example 1, except that the monomer feed was changed to 36 mol % of DCDPE, 7 mol % of TPA, 7 mol % of IPA, 50 mol % of DHBP.

(Example 9)

A crystalline wholly aromatic polyester was obtained from solid phase polymerization in the similar manner as Example 1, except that the monomer feed was changed to 36 mol % of DCDPE, 8 mol % of TPA, 6 mol % of IPA, 50 mol % of DHBP.

(Example 10)

A crystalline wholly aromatic polyester was obtained from solid phase polymerization in the similar manner as Example 1, except that the monomer feed was changed to 37 mol % of DCDPE, 7 mol % of TPA, 6 mol % of IPA, 50 mol % of DHBP.

(Example 11)

A crystalline wholly aromatic polyester was obtained from solid phase polymerization in the similar manner as Example 1, except that the monomer feed was changed to 37 mol % of DCDPE, 8 mol % of TPA, 5 mol % of IPA, 50 mol % of DHBP.

(Example 12)

A crystalline wholly aromatic polyester was obtained from solid phase polymerization in the similar manner as Example 1, except that the monomer feed was changed to 40 mol % of DCDPE, 5 mol % of TPA, 5 mol % of IPA, 50 mol % of DHBP, and the final temperature of the solid phase polymerization was changed to 280 °C.

(Comparative Example 1)

"PEEK" (product name "VICTREX") was prepared as a comparison.

(Comparative Example 2)

A crystalline wholly aromatic polyester was obtained from solid phase polymerization in the similar manner as Example 1, except that the monomer feed was changed to 50 mol % of DCDPE, 40 mol % of DHBP, 10 mol % of 4,4-dihydroxybiphenyl (BP).

(Comparative Example 3)

A crystalline wholly aromatic polyester was obtained from solid phase polymerization in the similar manner as Example 1, except that the monomer feed was changed to 25 mol % of DCDPE, 10 mol % of TPA, 15 mol % of IPA, 50 mol % of DHBP.

(Comparative Example 4)

A crystalline wholly aromatic polyester was obtained from solid phase polymerization in the similar manner as Example 1, except that the monomer feed was changed to 35 mol % of DCDPE, 13 mol % of TPA, 2 mol % of IPA, 50 mol % of DHBP.

(Comparative Example 5)

A crystalline wholly aromatic polyester was obtained from solid phase polymerization in the similar manner as

Example 1, except that the monomer feed was changed to 40 mol % of DCDPE, 10 mol % of TPA, 50 mol % of DHBP.

(Comparative Example 6)

A crystalline wholly aromatic polyester was obtained from solid phase polymerization in the similar manner as Example 1, except that the monomer feed was changed to 45 mol % of DCDPE, 5 mol % of IPA, 50 mol % of DHBP.

A list of compositions of the crystalline wholly aromatic polyesters produced in the Examples and Comparative Examples as above is shown in Table 1.

[Table 1]

| | Composition Ratio (mol %) | | | | |
|---|---|---|---|---|---|
| | Aromatic Dicarboxylic Acid | | | Aromatic Diol | |
| | (9) DCDPE | (10) TPA | (11) IPA | (12) DHBP | (15) BP |
| Example 1 | 33 | 7 | 10 | 50 | - |
| Example2 | 33 | 10 | 7 | 50 | - |
| Example3 | 34 | 9 | 7 | 50 | - |
| Example4 | 34 | 10 | 6 | 50 | - |
| Example5 | 35 | 8 | 7 | 50 | - |
| Example6 | 35 | 9 | 6 | 50 | - |
| Example7 | 35 | 10 | 5 | 50 | - |
| Example8 | 36 | 7 | 7 | 50 | - |
| Example9 | 36 | 8 | 6 | 50 | - |
| Example10 | 37 | 7 | 6 | 50 | - |
| Example11 | 37 | 8 | 5 | 50 | - |
| Example12 | 40 | 5 | 5 | 50 | - |
| Comparative Example1 | - | - | - | - | - |
| Comparative Example2 | 50 | - | - | 40 | 10 |
| Comparative Example3 | 25 | 10 | 15 | 50 | - |
| Comparative Example4 | 35 | 13 | 2 | 50 | - |
| Comparative Example5 | 40 | 10 | - | 50 | - |
| Comparative Example6 | 45 | - | 5 | 50 | - |

[Performance Evaluation 1]

(Measurement of Melting Point and Glass Transition Temperature)

The above-described crystalline wholly aromatic polyesters and PEEK were measured for the melting point (°C) and the glass transition temperature (°C) using a differential scanning calorimeter (DSC) (manufactured by Hitachi High-Tech Science K.K.). At this time, the melting point (°C) was determined as the endothermic peak obtained by completely melting the polymer by increasing the temperature from room temperature to 390 °C at a temperature increasing rate of 20 °C/min, subsequently lowering the temperature to 50 °C at a rate of 10 °C/min, and further increasing the temperature to 420 °C at a rate of 20 °C/min. The glass transition temperature (°C) was calculated from the inflection point present in the lower temperature side than the endothermic peak. The measured results are shown in Table 2.

(Melt Polymerization)

Possibility of production by melt polymerization from the prepolymer state during melt polymerization in the manufacture of the crystalline wholly aromatic polyesters above was evaluated under the following evaluation criteria.

The evaluation results are shown in Table 1.

[Evaluation Criteria]

- ○ : Extremely suitable for melt polymerization since good flowability was maintained even in the process of taking out during stirring in the polymerization process.
- Δ : Good flowability was maintained during stirring in the polymerization process, and although the polymer is partially solidified during the process of taking out, it is suitable for melt polymerization as flowability is maintained.
- × : Unsuitable for melt polymerization since the polymer was solidified while stirring in the polymerization process.

(Thermal Stability)

The above-described crystalline wholly aromatic polyesters and PEEK were measured for the polymer weight loss with a TGA device at a temperature of the melting point of each polymer obtained after polymerization + 30 °C and the heat stability was evaluated. At this time, the weight loss of the polymer was calculated in percentage (%) when the temperature was maintained for 1 hour under atmosphere after the temperature was increased from room temperature to a predetermined temperature (melting point of the polymer + 30 °C) at a temperature increasing rate of 20 °C/min. The measured results are shown in Table 2.

[Performance Evaluation 2]

<Manufacture of Molded Article>

The crystalline wholly aromatic polyester powder obtained above was molded into a plate-form test piece using an injection molding machine (Babyplast; manufactured by Rambaldi), with a mold for a plate-form molded article having a thickness of 30 x 30 x 1 mm, under the conditions of a cylinder temperature of melting point + 30 °C and a mold temperature of 170 °C.

Pellets of "PEEK" prepared above (Victrex 450 G) were molded into a plate-form test piece using an injection molding machine (Babyplast; manufactured by "Rambaldi"), with a mold for a plate-form molded article having a thickness of 30 x 30 x 1 mm, under the conditions of a cylinder temperature of 400 °C and a mold temperature of 180 °C.

(Measurement of Kinetic Friction Coefficient)

Kinetic friction coefficient was measured using the plate-form test pieces obtained by injection molding above. The counterpart material was a hollow cylinder having an external diametre of 25.6 mm, an inner diametre of 20 mm, and a length of 15 mm, and the material used was S45C. The test speed was 0.5 m/s, load was 150 N, test time was 60 minutes, and the kinetic friction coefficient was determined by measuring the average value of 30 to 60 minutes after the start of the test. The measured results are shown in Table 2.

(Measurement of Abrasion Amount)

Abrasion amount was measured using the plate-form test pieces obtained by injection molding above. The counterpart material was a hollow cylinder having an external diametre of 25.6 mm, an inner diametre of 20 mm, and a length of 15 mm, and the material used was S45C. The test speed was 0.5 m/s, load was 150 N, the test time was 60 minutes, and the weight change before and after the test was measured and the values converted into volume amount are shown in Table 2.

(Measurement of PV limit)

PV limit was measured using the plate-form test pieces obtained by injection molding above. The counterpart material was a hollow cylinder having an external diametre of 25.6 mm, an inner diametre of 20 mm, and a length of 15 mm, and the material used was S45C. The test speed was 0.5 m/s, initial load was 50 N, and the load was increased by 100 N every 10 minutes. PV limit was determined from the product of the pressure in the load 1 step prior to the load step in which abnormal friction was seen and the speed, and the results are shown in Table 2.

[Table 2]

| | Performance Evaluation 1 | | | | Performance Evaluation 2 | | |
|---|---|---|---|---|---|---|---|
| | Melting Point (°C) | Glass Transition Temperature (°C) | Melt Polymerization | Thermal Stability (%) | Kinetic Friction Coefficient | Abrasion Amount ($mm^3$) | PV limit (kPa·m/s) |
| Example 1 | 308 | 162 | ○ | 0.5 | 0.28 | 6.3 | 1625 |
| Example 2 | 313 | 154 | ○ | 0.6 | 0.28 | 10.5 | 1625 |
| Example 3 | 312 | 156 | Δ | 0.8 | 0.32 | 6.0 | 1625 |
| Example 4 | 317 | 156 | Δ | 0.9 | 0.26 | 9.9 | 1625 |
| Example 5 | 317 | 160 | ○ | 1.1 | 0.31 | 5.8 | 1625 |
| Example 6 | 319 | 157 | Δ | 0.9 | 0.28 | 5.8 | 2125 |
| Example 7 | 321 | 155 | Δ | 1.6 | 0.30 | 7.1 | 2125 |
| Example 8 | 318 | 162 | ○ | 0.6 | 0.30 | 6.4 | 1625 |
| Example 9 | 320 | 159 | ○ | 1.2 | 0.31 | 4.7 | 2375 |
| Example 10 | 325 | 155 | ○ | 1.1 | 0.29 | 7.2 | 2375 |
| Example 11 | 325 | 160 | Δ | 0.8 | 0.29 | 5.8 | 2125 |
| Example 12 | 331 | 157 | ○ | 3.8 | 0.30 | 7.9 | 2375 |
| Comparative Example 1 | 341 | 147 | - | 0.5 | 0.65 | 6.7 | 625 |
| Comparative Example 2 | 350 | 152 | × | 8.7 | 0.27 | 5.4 | 2375 |
| Comparative Example 3 | 290 | 157 | ○ | 0.7 | 0.59 | 22.6 | 625 |
| Comparative Example 4 | 336 | 155 | × | 3.2 | 0.27 | 8.0 | 2375 |
| Comparative Example 5 | 344 | 143 | × | 2.8 | 0.31 | 10.0 | 1875 |
| Comparative Example 6 | 348 | 148 | × | 5.5 | 0.32 | 5.2 | 2125 |

< Manufacture of Polyester Resin Composition >

(Example 13)

69.2 part by mass of the wholly aromatic liquid crystal polyester obtained in Example 9, 20 part by mass of fluorine resin (PTFE; KT-400M; manufactured by Kitamura K.K.), 10 part by mass of graphite (PAG-5; manufactured by Nippon Graphite K.K), and 0.8 part by mass of carbon black were blended and extruded out using a φ 25 mm twin-screw extruder (L/D=41) at a cylinder temperature of 350 °C, screw rotational speed of 100 rpm, resin introduction amount of 6 kg/h to obtain a polyester resin composition.

(Example 14)

A polyester resin composition was obtained by extrusion in the similar manner as Example 13, except that 69.2 part by mass of the wholly aromatic liquid crystal polyester obtained in Example 9, 10 part by mass of a carbon fiber filler (CF; product name: HTC702; manufactured by Toho Tenax K.K.), 10 part by mass of a fluorine resin, 10 part by mass of graphite, and 0.8 part by mass of carbon black were blended.

(Example 15)

A polyester resin composition was obtained by extrusion in the similar manner as Example 13, except that 69.2 part by mass of the wholly aromatic liquid crystal polyester obtained in Example 9, 10 part by mass of a fluorine resin, 10 part by mass of an aramid fiber (conex; manufactured by Teijin K.K.), 10 part by mass of graphite, and 0.8 part by mass of carbon black were blended.

(Example 16)

A polyester resin composition was obtained by extrusion in the similar manner as Example 13, except that 69.2 part by mass of the wholly aromatic liquid crystal polyester obtained in Example 9, 30 part by mass of a carbon fiber filler, and 0.8 part by mass of carbon black were blended.

(Example 17)

A polyester resin composition was obtained by extrusion in the similar manner as Example 13, except that 69.2 part by mass of the wholly aromatic liquid crystal polyester obtained in Example 9, 15 part by mass of a carbon fiber filler, 10 part by mass of graphite, 5 part by mass of boron nitride fibers (BN; Denka boron nitride_GP; manufactured by Denka K.K.), and 0.8 part by mass of carbon black were blended.

(Example 18)

A polyester resin composition was obtained by extrusion in the similar manner as Example 13, except that 69.2 part by mass of the wholly aromatic liquid crystal polyester obtained in Example 9, 15 part by mass of a carbon fiber filler, 10 part by mass of graphite, 5 part by mass of molybdenum disulfide ($MoS_2$; M-5 powder; manufactured by Daizo K.K.), and 0.8 part by mass of carbon black were blended.

(Example 19)

A polyester resin composition was obtained by extrusion in the similar manner as Example 13, except that 69.2 part by mass of the wholly aromatic liquid crystal polyester obtained in Example 9, 30 part by mass of a glass fiber filler (GF; product name: T-786H; manufactured by Nippon Electric Glass Co., Ltd.) and 0.8 part by mass of carbon black were blended.

(Reference Example 1)

The wholly aromatic liquid crystal polyester obtained in Example 9 was extruded in the similar manner as Example 13 to obtain a polyester resin composition.

A list of the composition of the polyester resin compositions manufactured in the Examples and the Comparative Examples above are shown in Table 3.

[Table 3]

| | Composition (part by mass) | | | | | | | | |
|---|---|---|---|---|---|---|---|---|---|
| | Wholly Aromatic Liquid Crystal Polyester | Filler | | | | | | | |
| | | CF | PTFE | aramid fiber | graphite | BN | $MoS_2$ | GF | CB |
| Example 13 | 69.2 | - | 20 | - | 10 | - | - | - | 0.8 |
| Example 14 | 69.2 | 10 | 10 | - | 10 | - | - | - | 0.8 |
| Example 15 | 69.2 | - | 10 | 10 | 10 | - | - | - | 0.8 |
| Example 16 | 69.2 | 30 | - | - | - | - | - | - | 0.8 |

(continued)

| | Composition (part by mass) | | | | | | | | |
|---|---|---|---|---|---|---|---|---|---|
| | Wholly Aromatic Liquid Crystal Polyester | Filler | | | | | | | |
| | | CF | PTFE | aramid fiber | graphite | BN | $MoS_2$ | GF | CB |
| Example 17 | 69.2 | 15 | - | - | 10 | 5 | - | - | 0.8 |
| Example 18 | 69.2 | 15 | - | - | 10 | - | 5 | - | 0.8 |
| Example 19 | 69.2 | - | - | - | - | - | - | 30 | 0.8 |
| Reference Example 1 | 100 | - | - | - | - | - | - | - | - |

[Performance Evaluation 3]

<Manufacture of Molded Article>

The crystalline wholly aromatic polyesters obtained above were extruded out using a φ 25 mm twin-screw extruder (L/D=41) at a cylinder temperature of 350 °C, screw rotational speed of 100 rpm, resin introduction amount of 4 kg/h to obtain pellets.

The obtained pellets were molded into a plate-form test piece using an injection molding machine (SE18DUZ; manufactured by Sumitomo Heavy Industries, Ltd.), with a mold for a plate-form molded article having a thickness of 40 x 40 x 2 mm, under the conditions of a cylinder temperature of 350 °C and a mold temperature of 175 °C.

(Measurement of Kinetic Friction Coefficient)

The obtained plate-form test pieces by injection molding as above were measured for kinetic friction coefficient in the similar manner as [Performance Evaluation 2] above. The measured results of Examples 13, 14, 15, and Reference Example 1 are shown in Table 4.

(Measurement of Abrasion Amount)

The plate-form test pieces obtained by injection molding above were measured for abrasion amount in the similar manner as [Performance Evaluation 2] above. The measured results of Examples 13, 14, 15, and Reference Example 1 are shown in Table 4.

[Table 4]

| | Performance Evaluation 3 | |
|---|---|---|
| | Kinetic Friction Coefficient | Abrasion Amount (mg) |
| Example 13 | 0.21 | 0.9 |
| Example 14 | 0.18 | 1.4 |
| Example 15 | 0.26 | 6.0 |
| Reference Example 1 | 0.31 | 8.2 |

[Performance Evaluation 4]

(Measurement of Elastic Modulus)

The plate-form molded articles having the thickness of 40 x 40 x 2 mm obtained from the <Manufacture of Molded Article> in [Performance Evaluation 3] above were cut into test pieces having the thickness of 40 x 3 x 2 mm

and the storage elastic modulus (GPa) was measured by using an elastic modulus measuring device (DMA) (manufactured by Hitachi High-Tech Science K.K.). At this time, the temperature was raised from room temperature to 220 °C at a temperature increasing rate of 4 °C/min. The measured results are shown in Table 5. The addition of the fillers largely improved the storage elastic modulus, and it was possible to confirm the mechanical characteristics were excellent.

[Table 5]

| | Performance Evaluation 4 |
|---|---|
| | Elastic Modulus (GPa) |
| Example 16 | 5.9 |
| Example 17 | 5.9 |
| Example 18 | 5.3 |
| Example 19 | 4.2 |
| Reference Example 1 | 2.2 |

## Claims

1. A crystalline wholly aromatic polyester which is a polycondensate of an aromatic dicarboxylic acid and an aromatic diol, wherein
a structural unit derived from the aromatic dicarboxylic acid comprises structural unit (I) represented by the following formula (1):

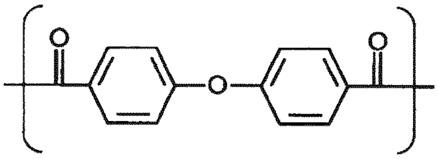

(1)

;

structural unit (II) represented by the following formula (2):

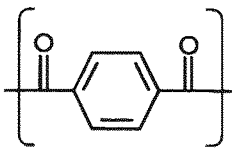

(2)

;

and structural unit (III) represented by the following formula (3):

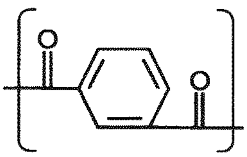

(3)

and a structural unit derived from the aromatic diol comprises structural unit (IV) represented by the following formula (4):

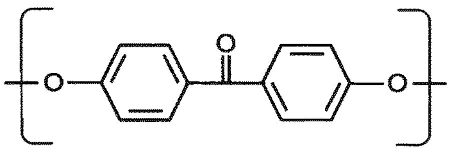

(4)

and wherein the composition ratio (mol %) of the structural units (I) to (III) in the entire structural units of the crystalline wholly aromatic polyester satisfies the following conditions:

$$30 \text{ mol \%} \leq \text{structural unit (I)} \leq 40 \text{ mol \%}$$

$$5 \text{ mol \%} \leq \text{structural unit (II)} \leq 10 \text{ mol \%}$$

$$5 \text{ mol \%} \leq \text{structural unit (III)} \leq 10 \text{ mol \%}$$

$$45 \text{ mol \%} \leq \text{structural unit (I)} + \text{structural unit (II)} + \text{structural unit (III)} \leq 50 \text{ mol \%}.$$

**2.** The crystalline wholly aromatic polyester according to claim 1, wherein the composition ratio (mol %) of the structural units (I) to (III) in the entire structural units of the crystalline wholly aromatic polyester satisfies the following conditions:

$$32 \text{ mol \%} \leq \text{structural unit (I)} \leq 39 \text{ mol \%}$$

$$5 \text{ mol \%} \leq \text{structural unit (II)} \leq 8 \text{ mol \%}$$

$$6 \text{ mol \%} \leq \text{structural unit (III)} \leq 10 \text{ mol \%}$$

$$48 \text{ mol \%} \leq \text{structural unit (I)} + \text{structural unit (II)} + \text{structural unit (III)} \leq 50 \text{ mol \%}.$$

**3.** The crystalline wholly aromatic polyester according to claim 1 or 2, wherein the composition ratio (mol %) of the structural unit (IV) in the entire structural units of the crystalline wholly aromatic polyester satisfies the following condition:

$$45 \text{ mol \%} \leq \text{structural unit (IV)} \leq 50 \text{ mol \%}.$$

**4.** The crystalline wholly aromatic polyester according to any one of claims 1 to 3, wherein the melting point of the crystalline wholly aromatic polyester is 300 °C or higher and lower than 360 °C.

**5.** The crystalline wholly aromatic polyester according to any one of claims 1 to 4, wherein the melting point of the crystalline wholly aromatic polyester is 305 °C or higher and 335 °C or lower.

**6.** A polyester resin composition comprising the crystalline wholly aromatic polyester according to any one of claims 1 to 5 and a filler.

**7.** The polyester resin composition according to claim 6, wherein the filler preferably comprises a fibrous filler material.

**8.** The polyester resin composition according to claim 7, wherein the fibrous filler material is selected from the group consisting of carbon fibers, silicon carbide fibers, ceramic fibers, glass fibers, boron nitride fibers, wollastonites, wiskers, metallic fibers, and aramid fibers.

**9.** The polyester resin composition according to any one of claims 6 to 8, wherein

the filler preferably comprises a non-fibrous filler material.

**10.** The polyester resin composition according to claim 9, wherein
the non-fibrous filler material is selected from the group consisting of fluorine resins, graphites, boron nitrides, and molybdenum disulfides.

**11.** The polyester resin composition according to any one of claims 6 to 10, wherein
the content of the filler in the polyester resin composition is 1 to 70 parts by mass in the case when the whole amount of the polyester resin composition is 100 part by mass.

**12.** A molded article comprising the crystalline wholly aromatic polyester according to any one of claims 1 to 5 or the polyester resin composition according to any one of claims 6 to 11.

## INTERNATIONAL SEARCH REPORT

International application No.
PCT/JP2019/040441

A. CLASSIFICATION OF SUBJECT MATTER
Int. Cl. C08G63/672(2006.01)i, C08K7/04(2006.01)i, C08L67/03(2006.01)i

According to International Patent Classification (IPC) or to both national classification and IPC

B. FIELDS SEARCHED

Minimum documentation searched (classification system followed by classification symbols)
Int. Cl. C08G63/672, C08K7/04, C08L67/03

Documentation searched other than minimum documentation to the extent that such documents are included in the fields searched
Published examined utility model applications of Japan 1922-1996
Published unexamined utility model applications of Japan 1971-2019
Registered utility model specifications of Japan 1996-2019
Published registered utility model applications of Japan 1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2016/158839 A1 (JX ENERGY CORPORATION) 06 October 2016, claims 1-9, paragraphs [0006], [0062], example 9 & US 2018/0105641 A1, claims 1-9, paragraphs [0007], [0053], example 9 & EP 3279234 A1 & CN 107531892 A & TW 201700528 A | 1-5, 12<br>6-11 |
| Y | JP 2018-53143 A (JXTG NIPPON OIL & ENERGY CORP.) 05 April 2018, claims 1-8, paragraphs [0004], [0050]-[0052] & US 2019/0233581 A1, claims 1-20, paragraphs [0004], [0048]-[0050] & EP 3521367 A1 & CN 109790362 A | 6-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28.11.2019 | 10.12.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2019/040441

C (Continuation). DOCUMENTS CONSIDERED TO BE RELEVANT

| Category* | Citation of document, with indication, where appropriate, of the relevant passages | Relevant to claim No. |
|---|---|---|
| A | JP 2015-108036 A (JX NIPPON OIL & ENERGY CORP.) 11 June 2015, entire text & WO 2015/083759 A1 & TW 201522578 A & CN 105764988 A & KR 10-2016-0096086 A | 1-12 |
| A | JP 5-5024 A (TEIJIN LTD.) 14 January 1993, entire text & US 5216109 A, entire text & EP 472366 A2 | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S627715 B
- WO 2016158839 A